Europäisches Patentamt

European Patent Office

Office européen des brevets

(19)

(11) Veröffentlichungsnummer: **0 514 569 A1**

## (12) EUROPÄISCHE PATENTANMELDUNG

(21) Anmeldenummer: **91108283.2**

(22) Anmeldetag: **22.05.91**

(51) Int. Cl.5: **G01L 9/00**, G01L 9/14

(43) Veröffentlichungstag der Anmeldung:
**25.11.92 Patentblatt 92/48**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Wagner, Dieter, Dipl.-Ing.**
**28, rue Hector Berlioz**
**F-31170 Tournefeuille(FR)**
Erfinder: **Sippel, Dieter, Dipl.-Ing.**
**6, rue de Picardie**
**F31270 Cugnaux(FR)**

(54) **Drucksensor.**

(57) Der zu messende Druck wird über eine Membran (4) in eine Verschiebung umgesetzt, die von einem Hall-Generator (6), der relativ zu einem Magneten (5) verschoben wird, erfaßt wird. Der Hall-Generator (6) ist mit seiner Achse größter Magnetfeldempfindlichkeit quer zur Richtung der Verschiebung angeordnet. Die Nullage der magnetischen Induktion, die der Stelle größter Genauigkeit entspricht, wird auf einen vorgegebenen Grenzdruckwert eingestellt, der zu überwachen und anzuzeigen ist.

FIG1

FIG4

EP 0 514 569 A1

Die Erfindung betrifft einen Drucksensor nach dem Oberbegriff von Anspruch 1.

Ein solcher Sensor kann z.B. zum Überwachen des Öldrucks in einem Kraftfahrzeug verwendet werden. Drucksensoren, bei denen der Druck über eine Membran in einen Weg oder eine Verschiebung umgesetzt wird, und Wegsensoren auf der Basis von magnetfeldempfindlichen Gebern oder Generatoren - z.B. Hall-Generatoren, Feldplatten - messen die Änderung des Magnetfeldes am Ort des Sensors. Die Änderung des Magnetfeldes wird dabei durch eine Positionsänderung eines (Permanent)-Magneten relativ zum Sensor oder durch eine Verzerrung eines festen Magnetfeldes mittels sich örtlich verschiebender weichmagnetischer Materialien erreicht. Bei Drucksensoren ist der Magnet oder das weichmagnetische Material so auf der Membran befestigt, daß eine Druckänderung eine Positionsänderung und damit eine Magnetfeldänderung am Ort des festangebrachten Gebers hervorruft. Es kann aber auch der Magnet fest angeordnet und der magnetfeldempfindliche Geber auf der beweglichen Membran befestigt sein.

Üblicherweise wird bei solchen Sensoren das Magnetfeld in Polarisationsrichtung erfaßt, d.h. der Magnet und der Geber liegen axial hintereinander in der Verschiebungsichtung. Ein Nachteil dieses Aufbaus besteht darin, daß die Megröße für das Magnetfeld, die magnetische Induktion B, im gesamten Arbeitsbereich immer ungleich 0 ist. Dies hat zur Folge, daß das Signal am Ausgang des Gebers nicht nur mit der Unstabilität des Geber-Offsets, d.h. des Ausgangssignals des Gebers bei B = 0, behaftet ist, sondern auch mit der temperatur- und alterungsbedingten Änderung der Magnetremanenz sowie der temperaturbedingten Änderung der Empfindlichkeit des Gebers.

Dieser Nachteil läßt sich zwar auch dadurch vermeiden, daß auf beiden Seiten des Gebers je ein Magnet angeordnet wird (DE-OS 28 42 140). Dadurch erhöht sich aber der zum Herstellen und Justieren des Sensors erforderliche Aufwand. Ein solcher Sensor ist auch nicht dafür geeignet, neben der Druck- oder Wegmessung noch einen vorgegebenen Grenzwert z.B. einen Mindestdruck genau zu überwachen.

Der Erfindung liegt die Aufgabe zugrunde, einen Sensor zu schaffen, der bei einem vorgegebenen Wert des Druckes (oder des Hubes) eine große Meßgenauigkeit und geringe Temperaturempfindlichkeit aufweist.

Diese Aufgabe wird erfindungsgemäß durch einen Drucksensor nach Anspruch 1 gelöst.

Vorteilhafte Weiterbildungen der Erfindung sind den Unteransprüchen zu entnehmen.

Ein Vorteil der Erfindung liegt darin, daß einerseits durch die Anwendung der an sich bekannten Slide-by-Technik, bei der der magnetfeldempfindliche Geber seitlich, d.h. parallel zur Magnetisierungsrichtung, verschoben und das Streufeld, d.h. das Feld senkrecht zur Magnetisierungsrichtung, ausgewertet wird, ein einziger Magnet benötigt wird. Andererseits enthält der Meßbereich einen Punkt in dem B = 0 ist. Mit einer mechanischen Justiereinrichtung wird der Geber so eingestellt, daß er sich bei der Beaufschlagung mit der kritischen Meßgröße - d.h. dem Meßpunkt, für den die größte Präzision verlangt wird - genau bei dem Punkt B = 0 befindet. Die Meßgenauigkeit wird dann nur noch durch eine mögliche Unstabilität des konstruktiven Aufbaus und des Geber-Offsets beeinträchtigt.

Ein Ausführungsbeispiel der Erfindung wird im folgenden anhand der Zeichnung erläutert. Es zeigen:

Figur 1      ein Funktionsdiagramm eines erfindungsgemäßen Drucksensors,

Figur 2      ein Diagramm zur Erläuterung der Erfindung,

Figur 3      ein elektrisches Schaltbild des Drucksensors nach Figur 1 und

Figur 4      den konstruktiven Aufbau des Drucksensors nach Figur 1 in einem axialen Schnitt, und

Figur 5      ein weiteres Diagramm zur Erläuterung der Erfindung.

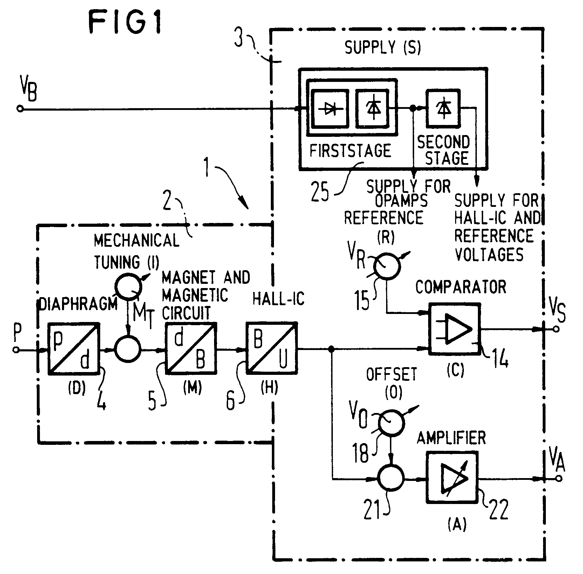

Ein Drucksensor 1 weist einen mechanischen Teil 2 und einen elektrischen Teil 3 auf, die in dem schematischen Funktionsdiagramm von Figur 1 getrennt dargestellt sind. Ein zu meßender und überwachender Druck P wird über eine Membran 4 in eine Positionsänderung oder Verschiebung d und diese mit einem Magneten 5 in eine Magnetfeldänderung umgewandelt. Der Magnet 5 besteht vorzugsweise aus einer Selten-Erd-Kobalt-Verbindung wie z.B. $SECo_5$ oder SmCo, da dieses Material hohe Koerzitivfeldstärken und gute Temperatureigenschaften aufweist. Ein magnetfeldempfindlicher Geber 6 wandelt die Magnetfeldänderung in ein zu ihr proportionales Ausgangssignal um. In dem Ausführungsbeispiel ist der Geber als Hall-Generator in Form einer integrierten Schaltung ausgeführt und wird deshalb im folgenden der Einfachheit halber als Hall-IC bezeichnet.

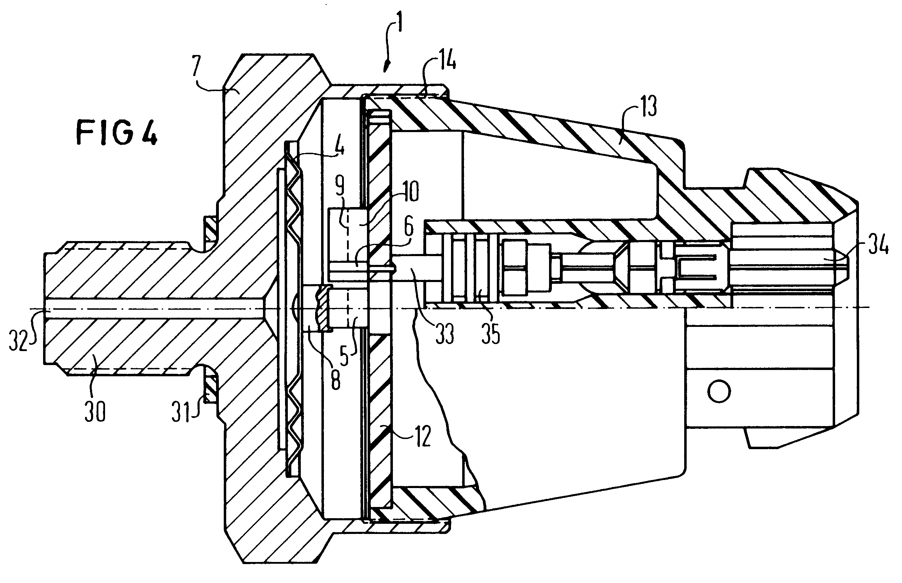

Die Membran 4 (vgl. auch Figur 4) besteht aus CuBe, und sie wird durch Hartlöten mit einem Gehäusedeckel 7 aus Messing verbunden. Nach dem Hartlöten wird sie wärmebehandelt, um sie spannungfrei zu machen.

In der Mitte der Membran 4 ist ein Messingsockel 8 aufgelötet, der als Träger für den Magneten 5 dient. Der Magnet 5 ist in Axialrichtung aufmagnetisiert, wobei der magnetische Südpol in Richtung auf die Membran 4 weist. Der Magnet 5 ist auf dem Messingsockel 8 mit einem hochtemperaturbeständigen Kleber befestigt. Durch eine gestrichelte Linie 9 ist die Nullage der magnetischen Induktion angedeutet. Der Drucksensor 1 ist hier in der Stellung bei Beaufschlagung mit dem Schaltdruck $p_S$ dargestellt.

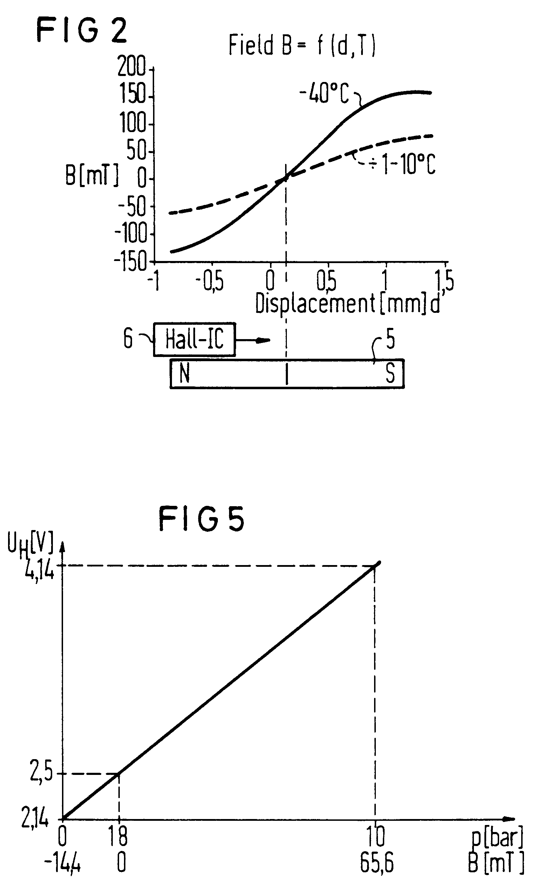

Eine Positionsänderung oder Verschiebung d des Magneten 5 bewirkt eine Magnetfeldänderung am Ort des fest angebrachten Hall-IC 6 (Figur 2). Gemessen wird die Änderung des in Radialrichtung verlaufenden Streufeldes des Magneten 5, d.h. der Hall-IC ist so plaziert, daß seine magnetfeldempfindliche Achse mit der Radialrichtung des zylindrischen Magneten 5 übereinstimmt. Zur Erhöhung des Meßeffektes wird der magnetische Fluß durch ein auf der Rückseite des Hall-IC angebrachtes weichmagnetisches Stahlteil 10 (vgl. Figur 4) konzentriert.

Die höchste Genauigkeit in dem gesamten Meßbereich wird auf halber Magnethöhe, d.h. an der Grenze zwischen magnetischem Nord- und Südpol erzielt: Die magnetische Induktion beträgt hier B = 0 mT. Damit haben thermisch bedingte Änderungen der Magnetremanenz und der Magnetfeld-Empfindlichkeit des Hall-IC keinen Einfluß auf die Messung. Deshalb wird, um ein möglichst genaues Ausgangssignal des Sensors zu erreichen, der Hall-IC so justiert, daß er sich dann, wenn der Drucksensor 1 mit dem zu überwachenden Grenzdruckwert beaufschlagt wird, genau auf der Höhe der genannten Grenze zwischen Nord- und Südpol befindet.

Der Hall-IC 6 ist auf einer Leiterplatte 12 (Figur 4) befestigt, die ihrerseits an einem Steckereinsatz 13 des Gehäuses befestigt ist. Der Steckereinsatz 13 ist mit dem Gehäusedeckel 7 über ein Feingewinde 14 verbunden. Die mechanische Justierung des Drucksensors 1 erfolgt durch Hineinschrauben des Steckereinsatzes 13 in den Gehäusedeckel 7, und zwar soweit, bis an dem Ausgang des Hall-IC diejenige Spannung abgegeben wird, die - als Gerätegröße - einem Magnetfeld mit B = 0 mT entspricht.

Der Hall-IC 6 liefert ein dem Magnetfeld linear proportionales Ausgangssignal. Sein Meßbereich liegt zwischen -100 mT und +100 mT. Bei 0 mT liegt sein Ausgangssignal auf halber Höhe der Versorgungsspannung. Seine Empfindlichkeit und sein Ausgangssignal bei B = 0 mT ändern sich proportional mit einer Änderung der Versorgungsspannung (sog. ratiometrischer Geber).

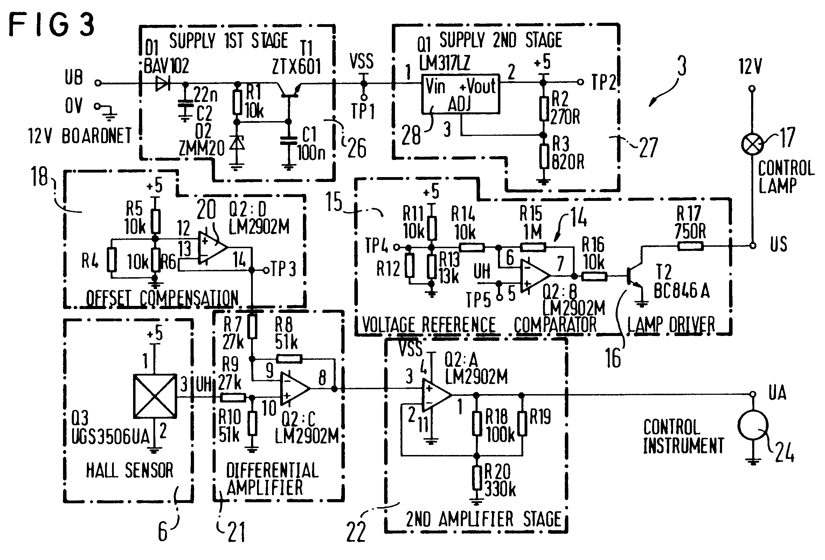

In dem elektrischen Teil 3 des Drucksensors 1 (Figur 1 und 3) wird das Ausgangssignal des Hall-IC 6 einer Offsetkorrektur unterworfen und verstärkt. Um das Erreichen des vorgegebenen Druckgrenzwertes, z.B. eines Schaltdruckes von $p_S$ = 1,8 bar, anzuzeigen, wird das Ausgangssignal des Hall-IC 6 in einem Komparator 14 mit einer Referenzspannung verglichen, die von einer Referenzspannungs-Quelle 15 geliefert wird. Sie wird mit einem aus Widerständen R11, R12 und R13 bestehenden Spannungsteiler aus einer stabilisierten Versorgungsspannung von +5 V erzeugt und mittels eines veränderlichen Widerstands R12 auf die Offsetspannung des Hall-IC 6, etwa 2,5 V eingestellt. Diese Referenzspannung ändert sich ebenso wie die Offsetspannung des Hall-IC 6 proportional mit einer Änderung der Versorgungsspannung, d.h. ratiometrisch. Dadurch werden Fehler durch Schwankungen der Versorgungsspannung vermieden. Die Referenzspannung kann an einem Testpunkt TP4 überprüft werden.

Der Komparator 14 enthält einen Operationsverstärker (die Bauteile-Typen sind aus Figur 3 ersichtlich), der als Differenzverstärker mit hoher Verstärkung geschaltet ist: Dadurch werden Prell-Erscheinungen verhindert. Der Verstärkungsgrad wird durch zwei Widerstände R14 und R15 festgelegt. Bei Überschreiten des vorgegebenen Grenzdruckwerts ps geht die Ausgangsspannung des Komparators auf High-Zustand, der etwa der Spitzenspannung Vss entspricht. Der Komparator 14 steuert über einen Koppelwiderstand R16 einen Transistor-Treiber 16 mit offenem Kollektor-Ausgang, an den eine Warnlampe 17 angeschlossen ist, die an einer positiven Versorgungsspannung von 12 V liegt. Der Transistor-Treiber 16 schaltet die Lampe 17 auf Masse, sobald der Komparator 14 das Erreichen des Grenzdruckwerts $p_S$ anzeigt. Ein Schutzwiderstand R17 begrenzt den Ausgangsstrom.

Eine elektronische Offset-Korrekturschaltung 18 ermöglicht eine Korrektur der Offsetspannung des Hall-IC 6. Eine Offset-Referenzspannung $V_O$ wird aus der 5 Volt-Versorgungsspannung für den Hall-IC mit einem Spannungsteiler erzeugt, der aus einem einstellbaren Widerstand R4 und zwei festen Widerständen R5 und R6 besteht. Die Referenzspannung $V_O$ wird durch Trimmen des Widerstands R4 auf diejenige Spannung abgeglichen, die bei einem Druck P = 0 bar an dem Ausgang des Hall-IC 6 ansteht.

Die Referenzspannung $V_O$ wird über einen Imdpedanzwandler 20 einem Differenzverstärker 21 zugeführt und dort von der Ausgangsspannung $U_H$ des Hall-IC 6 subtrahiert. Das Differenzsignal wird dabei einer ersten Verstärkung unterworfen, um Fehler, die sich aus dem schlechten Rail-to-Rail-Verhalten ergeben, möglichst gering zu halten.

Das Ausgangssignal des Differenzverstärkers 21 wird einer zweiten Verstärkerstufe 22 zugeführt und dort durch einen nichtinvertierenden Operationsverstärker verstärkt. Die Empfindlichkeit des Verstärkers wird durch Trimmen eines Gegenkopplungswiderstandes R19 auf die gewünschte Ausgangsempfindlichkeit des Drucksensors 1 abgeglichen.

Das Ausgangssignal der zweiten Verstärkerstufe 22 wird schließlich einem Anzeigeninstrument 24 zugeführt, das den an dem Drucksensor 1 anliegenden Druck anzeigt.

Eine Versorgungsschaltung 25 (Figur 1), die z.B. aus dem Bordnetz eines Kraftfahrzeuges mit einer Spannung $V_B$ = 12 V versorgt wird, besteht aus zwei Stufen. Eine erste Versorgungsstufe 26 (Figur 3) schützt die Elektronik durch eine Verpolschutzdiode D1 gegen Verpolen und begrenzt mit einem Längsregler, der aus einem Transistor T1, einem Widerstand R1 und einer Diode D2 besteht, die Spannung am Ausgang dieser Stufe auf maximal 18 V. Durch diesen Längsregler wird die Elektronik auch von leitungsgebundenen Störungen aus dem Bordnetz geschützt, z.B. vor sogenannten Load-Dump-Impulsen. Zwei Kondensatoren C1 und C2 dämpfen den Regelkreis.

Die Ausgangsspannung $V_{SS}$ der ersten Versorgungsstufe 26 kann an einem Testpunkt TP1 gemessen werden. Mit ihr werden alle vier Operationsverstärker des elektrischen Teils 3 und die zweite Versorgungsstufe 27 versorgt.

Die zweite Versorgungsstufe 27 enthält einen regelbaren Spannungsstabilisator 28. Mit zwei Widerständen R2 und R3 wird die Ausgangsspannung der zweiten Versorgungsstufe auf 5 Volt eingestellt. Sie kann an einem Testpunkt TP 2 überprüft werden. Diese zweite Versorgungsstufe 27 versorgt die Spannungsteiler, die die Referenzspannungsquelle für die Offset-Korrekturschaltung 18 und die Referenzspannungsquelle 15 für den Komparator 14 bilden, und außerdem das Hall-IC 6.

In dem Diagramm von Figur 5 ist die Ausgangsspannung $U_H$ in Abhängigkeit von dem zu messenden Druck P dargestellt. Der Meßbereich des Drucksensors 1 beträgt 0 bis 10 bar. Der dazu proportionale Bereich der magnetischen Induktion beträgt von -14,4 bis +65,6 mT. Aus der Figur 5 ist ersichtlich, daß der Nullwert der magnetischen Induktion auf einen Druckgrenzwert $p_S$ = 1,8 bar justiert ist. Dies ist der zu überwachende Mindestdruck, bei dem der Drucksensor 1 die größte Genauigkeit von z.B. ± 200 mbar aufweist.

Um den Drucksensor 1 an einer Meßstelle zu befestigen, wird er mit einem Gewindestutzen 30 des Gehäusedeckels 7 dort eingeschraubt (Figur 4). Eine unverlierbare Dichtung 31 dichtet die Verbindung zwischen der Meßstelle und dem Drucksensor 1 ab. Der zu messende Öldruck gelangt über eine Bohrung 32 zu der Membran 4.

Die Leiterplatte 12 und damit die auf ihr angeordneten Schaltungsteile 3 sind durch ein Kabel 33 mit Steckerfahnen 34 des Steckerteils 7 verbunden. Die Kabeldurchführung ist mit Kabeldichtungen 35 abgedichtet. Über einen nicht dargestellten Stecker erfolgt die Verbindung zu der Warnlampe 17 (Figur 3), dem Anzeigeinstrument 24 und dem Bordnetz des Kraftfahrzeugs.

**Patentansprüche**

1. Drucksensor (1) mit folgenden Bestandteilen:
   - einer den zu messenden Druck in eine axiale Verschiebung umsetzende Membran (4),
   - einem Magneten (5) und einem magnetfeldempfindlicher Geber (6), die durch den auf die Membran wirkenden Druck gegeneinander verschoben werden, wobei in dem magnetfeldempfindlichen Geber in von der Verschiebung abhängiges Ausgangssignal ($U_H$) erzeugt wird, und
   - einer Justiereinrichtung (14), mit der die Nullage der magnetischen Induktion einstellbar ist

   **dadurch gekennzeichnet,**
   - daß der magnetfeldempfindliche Geber (6) mit seiner Achse größter Magnetfeldempfindlichkeit quer zur Richtung der Verschiebung (d) angeordnet ist, und
   - daß die Nullage der magnetischen Induktion auf einen zu überwachenden vorgegebenen Grenzdruckwert ($p_S$) eingestellt ist.

2. Drucksensor nach Anspruch 1,
   **dadurch gekennzeichnet,** daß die größte Empfindlichkeit des magnetfeldempfindlichen Gebers (6) bei dem zu überwachenden Grenzdruckwert ($p_S$) liegt.

3. Drucksensor nach Anspruch 1,
   **dadurch gekennzeichnet,** daß die Auswerteschaltung (3) eine Vergleichsschaltung (14) aufweist, in der das Ausgangssignal des magnetfeldempfindlichen Gebers (6) mit einer Spannungsschwelle verglichen wird, die dem Grenzdruckwert ($p_S$) entspricht.

4. Drucksensor nach Anspruch 1,
   **dadurch gekennzeichnet,** daß er eine Korrekturschaltung (18) aufweist, in der eine Referenzspannung erzeugt wird, die der Offset-Spannung des magnetfeldempfindlichen Gebers (6) bei Nulldruck entspricht und die einem Differenzverstärker (21) zugeführt wird, und daß in dem Differenzverstärker (21) die Referenzspannung von der Ausgangsspannung des Hall-Generators (6) subtrahiert und die Differenz verstärkt wird.

5. Drucksensor nach Anspruch 1,
   **dadurch gekennzeichnet,** daß er eine zweistufige Versorgungsschaltung (25) aufweist, deren erste Stufe (26) als Schutzschaltung ausgebildet ist und von deren zweiter Stufe (27) eine stabilisierte Versorgungsspannung für den magnetfeldempfindlichen Geber (6) und für die Erzeugung von Referenzspannungen geliefert wird.

6. Drucksensor nach Anspruch 1,
**dadurch gekennzeichnet,** daß der magnetfeldempfindliche Geber (6) ein Hall-Generator ist.

7. Drucksensor nach Anspruch 1,
**dadurch gekennzeichnet,** daß er einen ratiometrischen Geber (6) aufweist und daß eine dem Grenzdruckwert ($p_S$) entsprechende Spannungsschwelle sich ratiometrisch zu Änderungen der Versorgungsspannung verhält.

8. Drucksensor nach Anspruch 1,
**dadurch gekennzeichnet,** daß er eine Auswerteschaltung (3) für das Ausgangssignal des magnetfeldempfindlichen Sensors (6) aufweist und daß durch die Auswerteschaltung (3) ein das Erreichen des Grenzdruckwertes anzeigendes Signal erzeugt wird.

# FIG 1

## FIG 2

Field B = f (d,T)

## FIG 5

FIG 3

EP 0 514 569 A1

FIG 4

EP 0 514 569 A1

Europäisches
Patentamt

**EUROPÄISCHER RECHERCHENBERICHT**

Nummer der Anmeldung

EP 91 10 8283

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2 842 140 (R. BOSCH GMBH) <br> * Figuren 1,6; Seite 6, Abschnitte 1-7; Seite 8, Absätze 4,5 * <br> --- | 1,6,8 | G 01 L 9/00 <br> G 01 L 9/14 |
| A | DE-A-3 104 379 (MOTO METER AG) <br> * Zusammenfassung; Figur 1; Ansprüche 1,2 * <br> --- | 1,6 | |
| A | EP-A-0 244 736 (KMK-SENSORTECHNIK GMBH & CO.) <br> * Figur 1; Zusammenfassung; Ansprüche 1,2,5 * <br> ----- | 1,6 | |

**RECHERCHIERTE SACHGEBIETE (Int. Cl.5)**

G 01 L 9/00
G 01 L 9/14

Der vorliegende Recherchenbericht wurde für alle Patentansprüche erstellt

| Recherchenort | Abschlußdatum der Recherche | Prüfer |
|---|---|---|
| BERLIN | 22-01-1992 | KOEHN G |